Europäisches Patentamt

European Patent Office

Office européen des brevets

(11) Publication number: **0 193 342**

**B1**

(12) **EUROPEAN PATENT SPECIFICATION**

(45) Date of publication of patent specification: **29.08.90**

(21) Application number: **86301157.3**

(22) Date of filing: **19.02.86**

(51) Int. Cl.⁵: **B 41 J 2/315, G 01 D 15/10**

(54) **Thermal printer.**

(30) Priority: **21.02.85 JP 33385/85**

(43) Date of publication of application:
**03.09.86 Bulletin 86/36**

(45) Publication of the grant of the patent:
**29.08.90 Bulletin 90/35**

(84) Designated Contracting States:
**DE FR GB NL**

(56) References cited:
**DE-A-3 103 935**
**DE-A-3 241 768**
**US-A-4 365 254**
**US-A-4 555 714**

(73) Proprietor: **TOKYO ELECTRIC CO., LTD.**
**6-13, 2-chome, Nakameguro**
**Meguro-ku Tokyo (JP)**

(72) Inventor: **Sakura, Yasuhiro**
**382 Umena**
**Mishima Shizuoka (JP)**
Inventor: **Nakayama, Satoshi**
**1-6, 3-chome Fuyohdai**
**Mishima Shizuoka (JP)**
Inventor: **Nimura, Hitoshi**
**100-18 Tsukamoto Kannami-cho**
**Tagata Shizuoka (JP)**

(74) Representative: **Daley, Michael John et al**
**F.J. CLEVELAND & COMPANY 40/43 Chancery Lane**
**London, WC2A 1JQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a thermal printer designed for printing scaled weight data and other contents on a recording paper by means of a thermal printing head.

In general, the use of a thermal printing head in a label printer or the like has a number of significant advantages including capabilities for forming any desired print pattern and for achieving clear printing of a bar code. However, since the print colour on the label is uniform over the entirety thereof, when it is required to render some specific portion of the printed information conspicuous for the purpose of emphasis, such portion is customarily enclosed with a line or is printed in a thicker style. Although the above purpose can be achieved to a certain degree by such conventional means the effect actually obtained is such that while the emphasized portion is distinguished, it is not particularly eye catching and does not stand out from its surroundings.

Emphasis can be accomplished by using multicolour printing, but this, however, requires two or more thermal heads which serves to complicate the structure of the printing mechanism.

It is known from Japanese Patent Application 46-79416 to use a single thermal head and to vary the intensity of heat by changing the period during which electric current is applied to the head in order to actuate different colour couplers which exist in different layers and which have different development temperatures.

A similar thermal printer is known from DE—A—3 241 768. However, this thermal printer does not use multi-layer thermal paper, but multi-colour ribbon which transfers ink of one colour or another to plain recording paper.

It is also known from U.S. Patent 4,365,254 to print a dichromatic paper by using two thermal heads and a recording material which involves special paper and requires printing to take place in several stages and at different times.

In this latter prior art printer, the recording paper is fed to a first printing head where an image of one colour is produced on the paper and then to a second head where an image of a different colour is produced on the paper. An electrical control circuit provides a first signal for data images of one colour and a second signal for data images of a second colour. A pair of shift registers receive the respective signals and pass these via latch circuits and drivers to the heating elements of the two thermal printing heads. A delay circuit provides a delay for one set of signals such that signals stored in one shift register and representing data of one colour are recorded on the paper when the heating elements of one printing head are selectively energised, whilst the delayed signals representative of data of the other colour are recorded on the paper by energisation of the corresponding heating elements of the other printing head after the paper has moved through a distance equivalent to the delay. However, the recording is effected by application to the heating elements of the identical heating energy regardless of the recording conditions.

In contradistinction, the present invention uses a single thermal printing head comprising a plurality of heating elements, the on-time of the current supplied to the elements being controlled in accordance with the differential content of a pair of print buffers such that a basic colouration is produced on the recording paper when the current-on time is short (low current) and a different colouration is produced when the current-on time is long (high current), the current-on time being extended only when the print buffer corresponding to said different colour contains data corresponding thereto.

It is an object of the present invention to display any desired label portion, which needs to be emphasized out of the entire print information, in a particular colour different from an ordinary one. Furthermore, it is an object of the invention to achieve this without reduction of the paper issuing speed.

According to the present invention, there is provided a thermal printer for producing multicolour data images on thermosensitive recording paper in response to the application of different temperatures thereto, and comprising:

a single thermal printing head arranged to be arranged in juxtaposition to a path traversed by said paper and including a plurality of heating elements and capable of printing on the paper over the entire width thereof whilst being kept in contact therewith during its unidirectional motion, characterised by first and second print buffer means for accumulating data to be printed in first and second different colours, and for feeding print data to control energisation of the heating elements of the thermal head control circuit means for controlling the output of each of said print buffer means and for controlling the temperature of printing of said thermal printing head by providing different printing temperatures for the contents of the print buffer means, said control circuit means having connected thereto a current-on-time control circuit for differentially setting the on-time periods of a constant current to the heating elements of said thermal head in response to selection of said print buffer means, to provide short current-on periods (low temperature) for printing data of said first colour, and longer current-on periods (higher temperature) for printing data of the second different colour, and means to extend the current-on period from a low temperature mode to a high temperature mode only when the print buffer means for the said second different colour contains print data corresponding thereto.

The recording paper has a multi-colour forming temperature characteristic. The printer has a thermal head containing a multiplicity of heating elements and capable of printing the recording paper over the entire width thereof while being kept in contact therewith during the unidirectional motion. At least two print buffers are provided for feeding print data to control energization of the heating elements of the thermal head. The control means is a current on-time control circuit for differentially setting the on-time periods of a constant current to the heating elements of the thermal head in response to selection of the print buffers under the predetermined condition that a basic colour for general print data is formed at a low temperature while a different particular colour for specific print data is formed at a high temperature in a printing operation on the recording paper. The high temperature printing is achieved by extending the current on-time only when the print buffer for the different particular colour has the specific print data therein.

When the specific print data requiring the different particular colour is stored in the print buffer, the current on-time for energizing the heating elements of the thermal head to execute high temperature printing is prolonged to increase the print time, but in the basic colour print portion for which such specific print data is not needed and the general print data alone is stored in the print buffer, the time for energizing the heating elements of the thermal head is shortened to reduce the print time for that line, whereby the label issuing efficiency can be enhanced and any portion of the label emphasized can be printed without any difficulty.

Following is a description by way of example only and with reference to the accompanying drawings of methods of carrying the invention into effect.

In the drawings:—

Figure 1 is a block diagram of an exemplary apparatus embodying the present invention.

Figure 2 is a side view of a partial mechanism.

Figure 3 is a plan view of a label, and

Figure 4 is a timing chart.

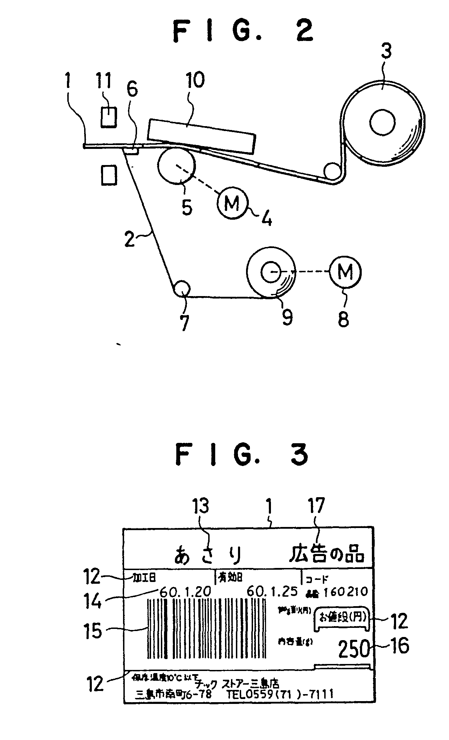

Hereinafter an exemplary embodiment of the present invention will be described with reference to the accompanying drawings. First, as illustrated in Figure 2, rectangular labels 1 of recording paper are attached at spaced intervals on a longitudinal carrier sheet 2 which is wound on a roll 3. The sheet 2 is advanced via a platen 5 driven by a pulse motor 4, and is bent about a label stripper plate 6 and then is wound, by way of a roller 7, around a takeup spool 9 rotated by a takeup motor 8. A thermal printer head 10 is located juxtaposed platen 5, and the label 1 separated by the label stripper plate 6 is forwarded to a label detector 11, which then detects the presence or absence of the label 1 photoelectrically while simultaneously detecting the passage and hence the time of passing of its leading edge.

Figure 3 shows exemplary contents printed on the label 1. Some information 12 may be preprinted thereon, such information may include production data, efficacy data, code, article number, unit price per 100 g, quantity (g) shop name, partition line (printed in, e.g. blue); and price (printed in, e.g., white on red ground). In addition thereto, specific information 17 including article name 13, date 14, bar code 15, data 16, "advertising data" and so forth is printed by the thermal head 10. The "advertising data" in the specific information 17 is the portion to be emphasized in this embodiment, and it is printed by the undermentioned means in a particular colour which is different from the colour of the other printed portions. In further detail, the label 1 has, on its surface, two colour forming layers with dichromatic temperature characteristics in which the upper layer is used for a basic colour such as black while the lower layer is used for a different particular colour such as red. In this example, when the current supplied to the heating elements of the thermal head 10 is kept constant, the basic colour (black) is formed on the label 1 in a low temperature mode during which the current on-time is short, and the particular colour (red) is formed in a high temperature mode during which the current on-time is long.

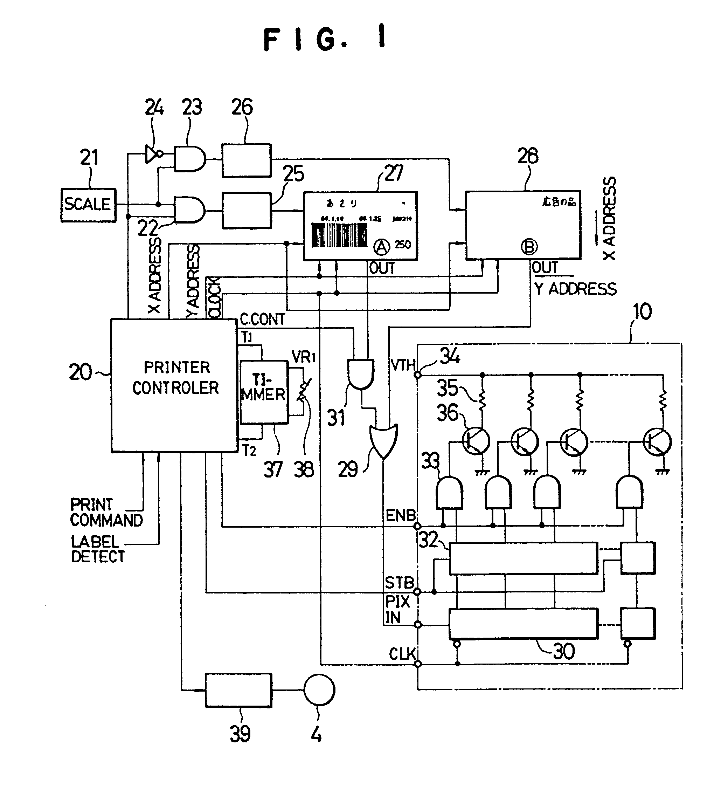

The electric circuit configuration is shown in Figure 1 in which printer controller 20 is so incorporated as to operate in response to a print command or to a label detection signal. A scale 21 is connected to one input of each of two AND gates 22 and 23, and the controller 20 is connected either directly or through an inverter 24 to another input of each of the AND gates 22 and 23. A first print buffer 27 and a second print buffer 28 are connected via character generator converters 25 and 26 respectively to the outputs of the AND gates 22 and 23. The controller 20 is further connected via an X address line, a Y address line and a clock line to both the print buffers 27 and 28.

The second print buffer 28 is connected via an OR gate 29 to a shift register 30 in the thermal head 10. Meanwhile the first print buffer 27 is connected to the input of an AND gate 31 together with a colour control signal (C. CONT) obtained from the printer controller 20, and the AND gate 31 is connected to the OR gate 29.

In the internal structure of the thermal head 10, the following operation is performed. First data of the print buffer 28 and, if a C. CONT signal is high (see later), of the print buffer 27 are inputted bit by bit to shift register 30 by the use of clock pulses (CLK), and the content of the shift register 30 is transferred bit by bit to a latch circuit 32, which is connected in parallel thereto, by the use of a strobe signal (STB). To the latch circuit 32 are connected AND gates 33 which control the current fed to the heating elements 35, the output of each AND gate 33 being connected via respective amplifier 36 to the heating elements 35 connected in common to a power supply 34. The AND gates 33 are opened by an enable signal (ENB).

A timer 37 serving as a current on-time control circuit is connected to the printer controller 20. The timer 37 is started in response to a signal representative of a time T1 and functions to determine a time T2, during which the contents of both the first print buffer 27 and the second print buffer 28 are printed simultaneously, as will be described later. A variable resistor 38 is connected to the timer 37 for adjusting the time T2.

Furthermore, a motor driver 39 coupled to the pulse motor 4 is connected to the printer controller 20 so as to control the forward motion of the label 1.

In the structure mentioned above, a strobe signal STB and an enable signal ENB are generated respectively at the rise of T1 and the rise of T2. Assume now that the period T1 corresponds to the time required for printing one line in a different particular colour on the label 1, and the pulse motor 4 is driven cyclically per T1 to feed the label 1 by one line. It is defined here that "one-line printing" relates to one line of unitary dots, not to one line of characters. The time T2 is determined by the timer 37, and the period T1 is divided into the time T2 and the time (T1—T2). It is supposed here that the output of the timer 37 is turned to a high level after the lapse of T2 from the start of T1.

The printing operation will be described below with the first print buffer 27 referred to as Ⓐ memory and the second print buffer 28 as Ⓑ memory. Regarding the contents stored in the Ⓐ and Ⓑ memories, X addresses denote those for individual lines, and Y addresses denote those in each line. Consequently, the print contents of 0, 1, 2 . . . Y, Y are existent in each of the X addresses.

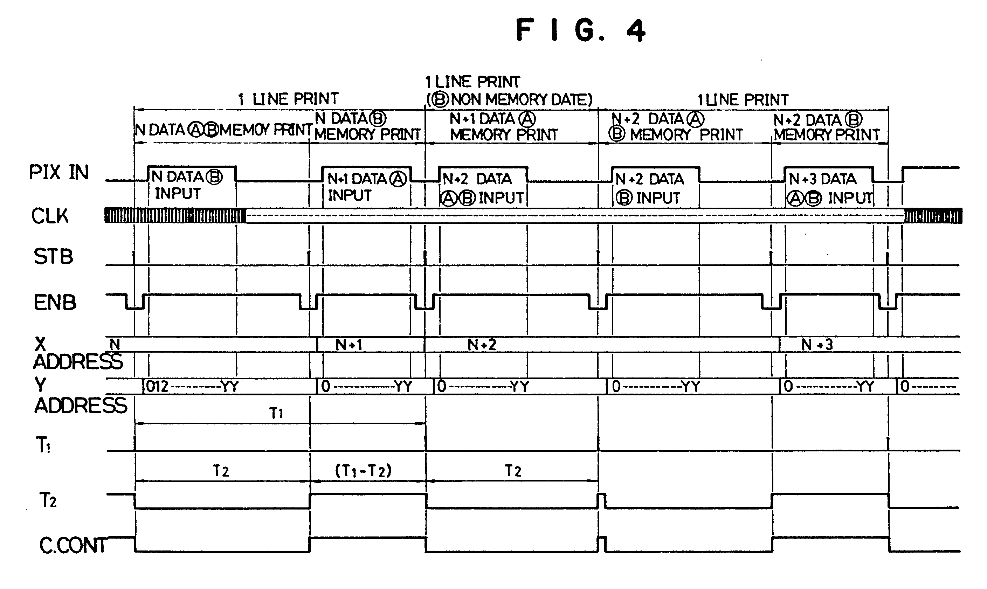

Referring now to the timing chart of Figure 4, the operation starts from "N DATA Ⓐ Ⓑ MEMORY PRINT". In this portion, the heating elements 35 begin to be energized according to the data already inputted to the shift register 30 in response to the STB signal and the ENB signal based on T1. Since T2 is still at a low level in this stage, the C. CONT signal also remains at a low level and therefore so serves as not to feed the output of the Ⓐ memory to the thermal head 10. Consequently, at this moment, input data to the thermal head 10 is merely the content of the Ⓑ memory, and the content actually printed is based on the data inputted immediately anterior to this stage.

After the lapse of the time T2, the content of the Ⓑ memory inputted to the shift register 30 is then applied to the latch circuit 32 to energize the heating elements 35. Consequently the content of the Ⓑ memory inputted previously is printed. Since T2 is at a high level, the C. CONT signal is also at a high level so that the data from both the Ⓐ and Ⓑ memories are inputted to the shift register 30 in the thermal head 10.

The label 1 fed by one line cyclically in the period T1 receives the combined contents of the Ⓐ and Ⓑ memories and the content of the Ⓑ memory alternately within the time length divided into a time (T1—T2) and a time T2, and is so processed as to print the received contents sequentially. Since the current on-time for energization including merely T2 becomes short to induce a low temperature, the content for the general print data such as the article name 13 stored in the Ⓐ memory is printed in the basic colour (black). Meanwhile, the specific information 17 of "advertising data" in the content of the Ⓑ memory is printed in the different particular colour (red) as the heating elements 35 are energized for the time T1 which is long to induce a high temperature. Thus, the resultant colour comes to be different from the other information such as the article name 13 and so forth which are printed only within the short energization time T2, whereby the specific information 17 is rendered distinguishable with remarkable definition.

The operation described above is performed relative to the print line including the specific information 17 which is to be printed in the different particular colour. In this embodiment, the print time is shortened for any print line of the bar code or the like where none of the different particular colour is required, as shown in the second one-line print portion in Figure 4.

It corresponds to the case where none of the specific information 17 is stored in the related Ⓑ memory, and the data is stored merely in the Ⓐ memory alone. Then, prior to lapse of the time T1, the current is supplied during the time T2 required for printing the article name 13 and so forth and, posterior to the basic colour (black) print time, a pulse of T1 is outputted for printing the next line. Therefore, the required print time is shortened in the line without any of the specific information 17 to consequently reduce the entire label issuing time, hence enhancing the operational efficiency thereof. In other words, the current on-time corresponding to the print time is extended in this embodiment only for the line requiring print in the different particular colour.

In a practical operation, the variable resistor 38 is adjusted properly to change the time T2. Such adjustment is executed in accordance with the paper quality of the label 1 and so forth.

Although in the above embodiment the "advertising data" is selectively printed in a different particular colour as the specific information 17, such particular colour printing may also be performed under the condition that individual items of various print groups (peculiar information 12) determined by preprinting on the label 1 are selectable with mutual combination. In a modification of using a non-preprinted label 1, the peculiar information 12 including a production date and so forth may be printed in a different particular colour by the thermal head 10 in the same manner as the aforementioned, while the general data including an article name 13 and so forth may be printed in a basic colour. Furthermore, when the characters such as "advertising data" to be emphasized are printed on a preprinted label 1, as already described in connection with the foregoing embodiment, a sum (price) calculated from (scaled weight)×(unit price) may be printed in the different particular colour to become conspicuous. Especially when the unit price is low as in this exemplary embodiment where the emphasized message includes "advertising data", it is preferred that the unit price be printed in the different particular colour (red). In such particular-colour printing operation, flags (e.g. red=1, black=0)for selecting a red print mode or a black print mode may be previously stored in flag memories by a keyboard or flag setting commands with respect to the individual items of article name, auxiliary characters (e.g. advertised article), weight and price. In the stage of preparing memory data to be stored in the print buffers 27 and 28, black-forming data may be produced for the print buffer 27 and red-forming data for the print buffer 28 respectively in accordance with such selection flags.

## Claims

1. A thermal printer for producing multicolour data images on thermosensitive recording paper in response to the application of different temperatures thereto, and comprising: a single thermal printing head arranged to be arranged in juxtaposition to a path traversed by said paper (1) and including a plurality of heating elements (35), and capable of printing on the paper over the entire width thereof whilst being kept in contact therewith during its unidirectional motion, characterised by first and second print buffer means (27, 28) for accumulating data to be printed in first and second different colours respectively, and for feeding print data to control energisation of the heating elements of the thermal head (35), control circuit means (20) for controlling the output of each of said print buffer means and for controlling the temperature of printing of said thermal printing head by providing different printing temperatures for the contents of the print buffer means, said control circuit means (20) having connected thereto a current-on-time control circuit (37) for differentially setting the on-time periods of a constant current to the heating elements of said thermal head in response to selection of said print buffer means, to provide short current-on periods (low temperature) for printing data of said first colour, and longer current-on periods (higher temperature) for printing data of the second different colour, and means (20, 29, 31) to extend the current-on period from a low temperature mode to a high temperature mode only when the print buffer means (28) for the said second different colour contains print data corresponding thereto.

2. A thermal printer as claimed in Claim 1, wherein a variable resistor (38) is connected to the timer (37) for adjusting the first time period (T2).

## Patentansprüche

1. Thermodrucker zum Erzeugen von mehrfarbigen Datenbildern auf thermoempfindlichem Aufzeichnungspapier in Abhängigkeit von der Zuführung unterschiedlicher Temperaturen dazu, enthaltend: einen einzigen Thermokopf, der dazu eingerichtet ist, nahe einem Weg angeordnet zu werden, der von dem Papier (1) beschrieben wird und der mehrere Heizelemente (35) aufweist und in der Lage ist, das Papier über die gesamte Breite desselben zu bedrucken, während er damit während seiner unidirektionalen Bewegung in Berührung gehalten wird, gekennzeichnet durch erste und zweite Druckpuffereinrichtungen (27, 28) zum Ansammeln von in ersten und zweiten unterschiedlichen Farben zu druckenden Daten und zum Zuführen von Druckdaten zur Steuerung der Energieversorgung der Heizelemente des Thermokopfes (35), durch eine Steuerschaltungseinrichtung (20) zum Steuern des Ausgangs einer jeden der Druckpuffereinrichtungen und zum Steuern der Drucktemperatur des Thermodruckkopfes, in dem unterschiedliche Drucktemperaturen gemäß dem Inhalt der Druckpuffereinrichtungen erzeugt werden, welche Steuerschaltungseinrichtung (20) mit einer Stromeinschaltzeitsteuerschaltung (37) verbunden ist, um die Einschaltzeitperioden eines konstanten Stromes zu den Heizelementen des Thermokopfes in Abhängigkeit von der Auswahl der Druckpuffereinrichtungen unterschiedlich einzustellen, um kurze Einschaltperioden (niedrige Temperatur) zum Drucken von Daten mit der ersten Farbe und längere Einschaltperioden (höhere Temperatur) zum Drucken von Daten mit der zweiten, anderen Farbe zu erzeugen, und durch Einrichtungen (20, 29, 31) zum Ausdehnen der Stromeinschaltperiode von einem Niedrigtemperaturbetrieb auf einen Hochtemperaturbetrieb nur, wenn die Druckpuffereinrichtung (28) für die zweite, andere Farbe entsprechende Druckdaten enthält.

2. Thermodrucker nach Anspruch 1, bei dem ein variabler Widerstand (38) mit dem Zeitgeber (37) verbunden ist, um die erste Zeitperiode (T2) einzustellen.

## Revendications

1. Imprimante thermique pour produire des images de données multicolores sur un papier d'enregistrement thermosensible en réponse à l'application de températures différentes sur ce dernier et comprenant: une unique tête d'impression thermique prévue pour être disposée en juxtaposition d'un parcours suivi par ledit papier (1) et comprenant plusieurs éléments chauffants (35), et capable d'imprimer sur le papier sur la totalité de sa largeur tout en étant maintenue en contact avec lui pendant son mouvement unidirectionnel, caractérisée par des premiers et seconds moyens à tampon d'impression (27, 28) pour accumuler les données à imprimer dans les première et seconde couleur différentes, respectivement, et pour envoyer les données d'impression pour commander l'excitation des éléments chauffants de la tête thermique (35), des moyens à circuit de commande (20) pour commander la sortie de chacun desdits moyens à tampon d'impression et pour commander la température d'impression de ladite tête d'impression thermique en fournissant des températures d'impression différentes pour les contenus des moyens à tampon d'impression, lesdits moyens à circuit de commande (20) étant reliés à un circuit de commande de durée d'application du courant (37) pour établir de façon différentielle les périodes d'application d'un courant constant aux éléments chauffants de ladite tête thermique en réponse à la sélection desdits moyens à tampon d'impression, pour déterminer de courtes périodes d'application du courant (basse température) pour imprimer les données de ladite première couleur, et des périodes d'application du courant plus longues (température élevée) pour imprimer les données de la seconde couleur différente, et des moyens (20, 29, 31) pour étendre la période d'application du courant et la faire passer d'un mode basse température à un mode haute température seulement quand les moyens à tampon d'impression (28) de ladite seconde couleur différente contiennent des données d'impression qui leur correspondent.

2. Imprimante thermique selon la revendication 1, dans laquelle une résistance variable (38) est reliée à la minuterie (37) pour régler la première période de temps (T2).

# F I G. I

# F I G. 2

# F I G. 3

| あ さ り | | 広告の品 |
|---|---|---|
| 加工日 | 有効日 | コード |
| 60.1.20 | 60.1.25 | No. 160 210 |

お値段(円)

内容量(g)   250

保存温度10°C 以下   チック ストアー三島店
三島市南町6-78   TEL0559(71)-7111

# FIG. 4

EP 0 193 342 B1